# DEMANDE DE BREVET EUROPEEN

(11) **EP 3 396 214 A1**
(43) Date de publication de la demande: **31.10.2018**
(21) Numéro de dépôt: 17305470.1
(22) Date de dépôt: 27.04.2017
(51) Int. Cl.: F16H 63/30, F16H 63/38, F16H 61/24

(54) **DOIGT DE COMMANDE À DOUBLE BILLAGE**

(71) Demandeur: DURA Automotive Holdings U.K., Ltd., Birmingham, B35 7AG (GB)
(72) Inventeur: MAITRE, Sébastien, 43120 Monistrole sur Loire (FR)
(74) Mandataire: Cabinet Laurent & Charras

(57) **Abrégé**

Dispositif (5) de transmission d'un mouvement lors d'un changement de rapport dans une boîte de vitesses d'un véhicule automobile, ledit dispositif (5) comprenant un doigt de commande (7), comprenant un corps (8) cylindrique creux monté sur un axe de commande (6), ledit axe de commande (6) comprenant une piste de billage (9) ménagée directement sur la circonférence de l'axe de commande (6) et coopérant avec un indexeur (10) pour permettre une indexation lors de la transmission du mouvement.

Selon l'invention, l'indexeur (10) comprend deux organes de roulement, tels que des billes (11) opposées en contact avec la piste de billage (9), de part et d'autre de l'axe de commande (6), chaque bille (11) traverse une ouverture (12) ménagée au travers du corps (8) du doigt de commande (7), les billes (11) étant reliées entre elles par un organe élastique (13) tendant à plaquer lesdites billes (11) contre la piste de billage (9) de l'axe de commande (6).

## Description

### DOMAINE TECHNIQUE

L'invention se rattache au secteur technique des boîtes de vitesses mécaniques pour véhicules automobiles.

Plus particulièrement, l'invention concerne un dispositif de transmission d'un mouvement lors d'un changement de rapport dans une boîte de vitesses mécanique d'un véhicule automobile.

### ART ANTERIEUR

Dans un exemple connu de réalisation, le dispositif comprend un doigt de commande, tel qu'un doigt de passage ou de sélection, monté sur un axe de commande, tel que respectivement un axe de passage ou de sélection. Le doigt de commande supporte une came avec un profil faisant office de piste de billage pour un indexeur à billes, notamment pour améliorer l'agrément et le confort de la commande des vitesses, indexer et positionner le point mort, et verrouiller la position de vitesse engagée.

D'une manière générale et bien connue, un doigt de commande coopère avec une encoche que présente une crosse fixée sur un axe pour le déplacement d'une fourchette de commande d'un baladeur pour la commande d'un rapport de vitesse. Le doigt de commande est assujetti à tout mécanisme de commande approprié, par exemple à une barre de commande accouplée au levier de vitesses ou autre. Ces dispositions ne sont pas décrites en détail car elles sont parfaitement connues pour un homme de métier et sont susceptibles de faire l'objet de différentes variantes d'exécution.

L'invention se situe au niveau de l'indexeur à billes et de la piste de billage, qui constituent des parties du dispositif de transmission sujettes à des frottements entrainant une sensation d'inconfort pour un utilisateur manoeuvrant le levier de vitesses, mais affectant aussi l'efficacité, à savoir le rendement, de la sélection ou du passage des vitesses.

Un autre inconvénient de l'état de la technique réside également dans le fait que les éléments constitutifs du dispositif de l'art antérieur, notamment l'indexeur à billes, sont souvent trop complexes de sorte que le coût de revient du dispositif est augmenté.

En effet, afin de limiter au maximum les frottements et gagner en efficacité, le dispositif met en oeuvre un indexeur à billes dit à haut rendement, réalisé par un assemblage complexe d'une bille sur un lit de billes, l'assemblage étant guidé axialement par d'autres billes. Ce type d'indexeur nécessite des usinages précis pour être assemblé, ce qui augmente fortement son coût de revient, et donc le coût de revient du dispositif de commande de vitesses en général.

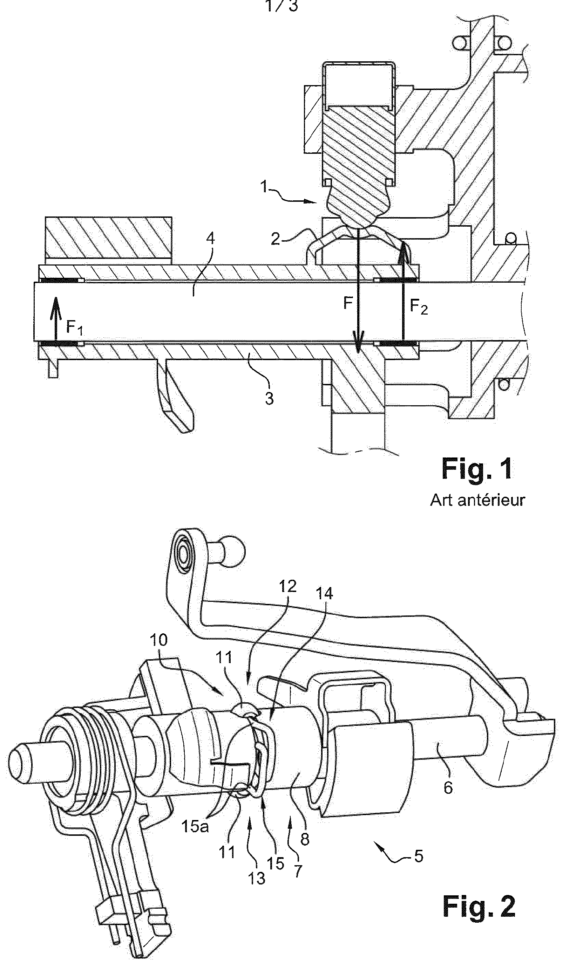

Même avec un indexeur à billes à haut rendement, il subsiste toujours des frottements au niveau de l'axe de sélection ou de passage. En effet, et comme illustré à la figure 1 représentant un dispositif selon l'art antérieur, la présence d'un indexeur à billes (1) en appui sur la piste de billage (2) créé un déséquilibre et engendre en réaction des forces (F1, F2) de frottement entre le corps du doigt de commande (3) et l'axe de commande (4) sur lequel il est monté. Pour pallier à cet inconvénient, il est en pratique nécessaire de prévoir des bagues ou des roulements sur l'axe de commande, ce qui rend plus complexe encore le montage.

Il est également connu de ménager directement la piste de billage sur l'axe de commande, mais cette solution ne permet pas de pallier les inconvénients liés à la complexité de l'indexeur à billes mis en oeuvre.

Afin de limiter davantage les forces de frottement, il est aussi connu de disposer un indexeur à billes pour le passage des vitesses, et un indexeur à billes pour la sélection des vitesses, tous deux en opposition pour contrecarrer les efforts de frottement entre eux et équilibrer les forces. De cette manière, il n'y a pas de force de frottement en réaction parasite, les forces de frottement s'opposent. Cependant, ce dispositif demeure toujours aussi complexe et est bien plus onéreux.

### EXPOSE DE L'INVENTION

L'un des buts de l'invention est donc de remédier aux inconvénients de l'art antérieur en proposant un dispositif de transmission d'un mouvement lors d'un changement de rapport dans une boîte de vitesses d'un véhicule automobile, comprenant un indexeur amélioré afin de ne pas nuire au confort d'utilisation pour un utilisateur, et d'augmenter l'efficacité de la sélection ou du passage des vitesses, tout en étant économique.

À cet effet, il a été mis au point un dispositif de transmission d'un mouvement lors d'un changement de rapport dans une boîte de vitesses d'un véhicule automobile, conforme à celui de l'état de la technique en ce qu'il comprend un doigt de commande, tel qu'un doigt de passage ou de sélection, comprenant un corps cylindrique creux monté sur un axe de commande, tel que respectivement un axe de passage ou de sélection. L'axe de commande comprend une piste de billage ménagée directement sur sa circonférence et coopérant avec un indexeur pour permettre une indexation lors de la transmission du mouvement.

Selon l'invention, l'indexeur comprend deux organes de roulement opposés en contact avec la piste de billage, de part et d'autre de l'axe de commande. Chaque organe de roulement traverse une ouverture ménagée au travers du corps du doigt de commande. Les organes de roulement sont reliés entre eux par un organe élastique tendant à plaquer lesdits organes de roulement contre la piste de billage de l'axe de commande.

Ainsi, l'invention réalise un double billage, avec deux organes de roulement en opposition. Les organes de roulement peuvent être de tout type, tel que bille, rouleau, ...

Contrairement à l'état de la technique, ce double billage est réalisé pour la même fonction. C'est-à-dire qu'il y a un double billage uniquement pour le passage ou la sélection. La présence du double billage permet de limiter, voire d'annuler les efforts de frottement engendrés par un billage radial simple car les efforts radiaux sont opposés. Ainsi, du fait des efforts en opposition, les efforts de frottement parasites sont quasi inexistants, ce qui contribue à garantir l'efficacité du dispositif et un haut rendement, sans inconfort pour l'utilisateur. Les deux billages sont reliés élastiquement entre eux et sont ainsi auto équilibrés.

De plus, l'invention permet de s'affranchir du système complexe d'indexeur à plusieurs niveaux de billes, tout en gardant les mêmes résultats en termes d'efficacité et de faiblesses des forces de frottement. L'invention est simple, l'encombrement et le nombre de composants mis en oeuvre pour fabriquer le dispositif selon l'invention sont considérablement réduits. Les pièces sont simples et les technologies utilisées pour les fabriquer sont classiques, simples et économiques.

De préférence, l'organe élastique de rappel est monté et fixé sur le corps cylindrique du doigt de commande. Il est par exemple inséré et maintenu en position dans des rainures ménagées sur le corps, transversalement à l'axe de commande.

De préférence, chaque organe de roulement est monté libre en rotation autour d'un axe parallèle à l'axe de commande.

Selon une forme de réalisation particulière, l'organe élastique de rappel se présente sous la forme d'un ressort de torsion comprenant deux branches disposées de part et d'autre de l'axe de commande et transversalement à celui-ci. Chaque branche est insérée au travers d'un orifice que présente chaque organe de roulement pour former les axes de rotation des organes de roulement.

Selon un autre exemple, l'organe élastique de rappel comprend deux tiges parallèles disposées de part et d'autre de l'axe de commande et transversalement à celui-ci. Chaque tige traverse un orifice que présente chaque organe de roulement pour former les axes de rotation des organes de roulement. Les tiges sont reliées entre elles par des ressorts de traction disposés au niveau de chaque extrémité des tiges.

Dans ces deux exemples, l'organe élastique de rappel est positionné dans l'axe de rotation des organes de roulement de sorte que les forces de frottements dans le roulement des organes de roulement sont relativement négligeables.

### DESCRIPTION SOMMAIRE DES FIGURES

D'autres avantages et caractéristiques ressortiront mieux de la description qui va suivre, donnée à titre d'exemple non limitatif, du dispositif selon l'invention, à partir des dessins annexés dans lesquels :
- la figure 1 est une représentation schématique illustrant en coupe longitudinale un dispositif de transmission d'un mouvement lors d'un changement de rapport dans une boîte de vitesses d'un véhicule automobile selon l'art antérieur ;
- la figure 2 est une représentation schématique illustrant en perspective un dispositif selon la présente invention ;
- la figure 3 est une représentation schématique en perspective illustrant le corps cylindrique du doigt de commande, équipé de l'indexeur à billes ;
- la figure 4 est une représentation schématique similaire à celle de la figure 3, illustrant l'axe de commande, le doigt de commande et l'indexeur en coupe longitudinale ;
- la figure 5 est une représentation schématique similaire à celle de la figure 4, en coupe transversale, et illustrant un premier mode de réalisation de l'organe élastique de rappel ;
- la figure 6 est une représentation schématique similaire à celle de la figure 4, en coupe transversale, et illustrant un second mode de réalisation de l'organe élastique de rappel.

### DESCRIPTION DETAILLEE DE L'INVENTION

En référence à la figure 2, et d'une manière connue, l'invention décrit un dispositif (5) de transmission permet d'assurer un changement de rapport dans le cadre d'une boîte de vitesses d'un véhicule automobile, et comprend un axe de commande (6), tel qu'un axe de passage ou de sélection, sur lequel est monté un doigt de commande (7), tel que respectivement un doigt de passage ou de sélection.

Le doigt de commande (7), par exemple de passage, dont la fonction est bien connue de l'état de la technique, est apte coopérer avec une encoche d'une crosse coopérant avec une fourchette pour la commande en translation d'un baladeur pour le changement d'une vitesse.

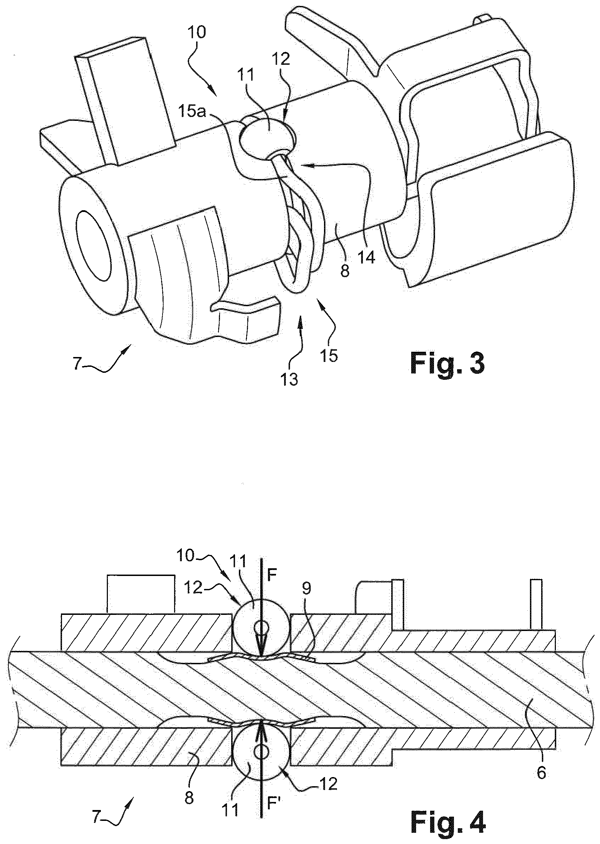

Le doigt de commande (7) comprend un corps (8) creux cylindrique monté sur l'axe de commande (6). En référence à la figure 4, l'axe de commande (6) comprend une piste de billage (9) ménagée directement sur sa circonférence, sous le corps (8) cylindrique. La piste de billage (9) présente un profil en came apte à permettre, en combinaison avec un indexeur (10), un agrément et une indexation des vitesses, par exemple au point neutre de la boîte de vitesses.

Afin d'équilibrer le dispositif (5) et diminuer, voire supprimer les efforts de frottement parasite, l'indexeur (10) est un indexeur à double billage opposé. L'indexeur (10) comprend deux organes de roulement (11) opposées en contact avec la piste de billage (9), de part et d'autre de l'axe de commande (6). Les organes de roulement peuvent être des billes, des rouleaux, etc. Dans la suite de la description, les organes de roulement sont décrits comme étant des billes (11). Les billes (11) traversent chacune une ouverture (12) ménagée au travers du corps (8) cylindrique du doigt de commande (7), et sont reliées entre elles par un organe élastique (13) tendant à plaquer lesdites billes (11) contre la piste de billage (9) de l'axe de commande (6).

De cette manière, l'indexeur (10) dit à double billage est auto équilibré et de conception simple. Il n'est plus nécessaire de mettre en oeuvre un indexeur (10) à billes aussi complexe que celui de l'art antérieur. L'indexeur (10) à double billage permet de limiter les frottements et de garder une efficacité optimale tout en diminuant les coûts de revient. Les forces de frottement (F, F') s'opposent (voir figure 4).

En pratique, l'indexeur (10) est monté et fixé directement sur le corps (8) cylindrique du doigt de commande (7). A cet effet, le corps (8) cylindrique comprend deux rainures (14) transversales prolongeant de part et d'autre les ouvertures (12) recevant les billes (11), pour y loger des parties de l'indexeur (10).

Par exemple, et selon une première forme de réalisation de l'indexeur (10) illustrée aux figure 2 à 5, l'organe élastique (13) de rappel de l'indexeur (10) se présente sous la forme d'un ressort de torsion (15) comprenant deux branches (15a) élastiques disposées de part et d'autre de l'axe de commande (6) et transversalement à celui-ci. Les branches (15a) sont chacune logée dans une rainure (14), et chaque branche (15a) est insérée au travers d'un orifice (11a), traversant ou non, que présente chaque bille (11) pour maintenir les billes (11) et permettre de former des axes de rotation des billes (11). Chaque bille (11) est donc montée libre en rotation autour d'un axe parallèle à l'axe de commande (6).

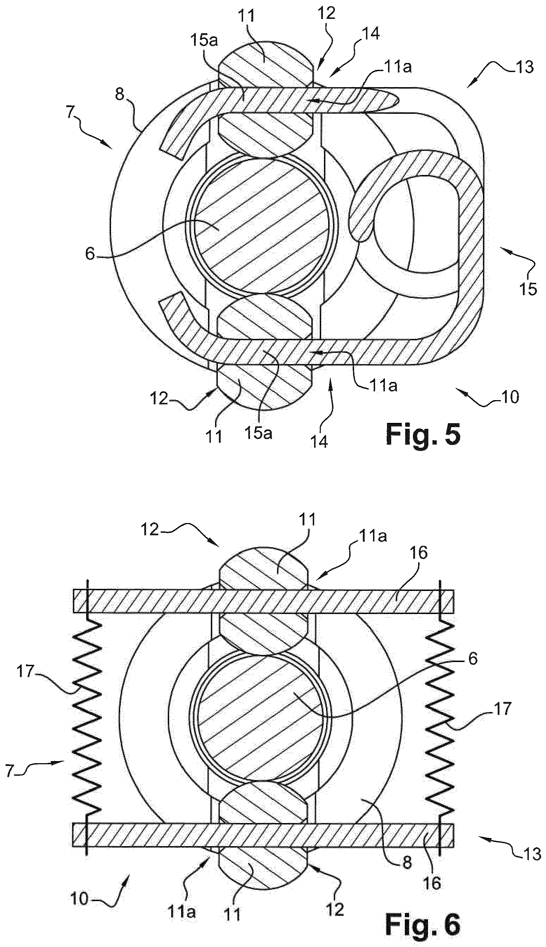

En référence à la figure 6, l'organe élastique (13) de rappel de l'indexeur (10) peut présenter une autre forme. Par exemple, l'organe élastique (13) comprend deux tiges (16) parallèles disposées de part et d'autre de l'axe de commande (6) et transversalement à celui-ci. Les tiges (16) sont chacune logée dans une rainure (14) et chaque tige (16) traverse l'orifice (11a) de la bille (11) correspondante. Les tiges (16) sont reliées entre elles par des ressorts de traction (17) disposés au niveau de chaque extrémité des tiges (16).

De ce qui précède, l'invention fournit bien un dispositif (5) de transmission d'un mouvement lors d'un changement de rapport dans une boîte de vitesses d'un véhicule automobile, comprenant un indexeur (10) simple et économique, tout en présentant une efficacité optimale.

## Revendications

1. Dispositif (5) de transmission d'un mouvement lors d'un changement de rapport dans une boîte de vitesses d'un véhicule automobile, ledit dispositif (5) comprenant un doigt de commande (7), comprenant un corps (8) cylindrique creux monté sur un axe de commande (6), ledit axe de commande (6) comprenant une piste de billage (9) ménagée directement sur la circonférence de l'axe de commande (6) et coopérant avec un indexeur (10) pour permettre une indexation lors de la transmission du mouvement, ***caractérisé* en ce que** l'indexeur (10) comprend deux organes de roulement (11) opposés en contact avec la piste de billage (9), de part et d'autre de l'axe de commande (6), chaque organe de roulement (11) traverse une ouverture (12) ménagée au travers du corps (8) du doigt de commande (7), les organes de roulement (11) étant reliés entre eux par un organe élastique (13) tendant à plaquer lesdits organe de roulement (11) contre la piste de billage (9) de l'axe de commande (6).

2. Dispositif (5) selon la revendication 1, ***caractérisé* en ce que** l'organe élastique (13) de rappel est monté et fixé sur le corps (8) du doigt de commande (7).

3. Dispositif (5) selon la revendication 2, ***caractérisé* en ce que** l'organe élastique (13) de rappel est inséré et maintenu en position dans des rainures (14) ménagée sur le corps (8) du doigt de commande (7), transversalement à l'axe de commande (6).

4. Dispositif (5) selon la revendication 1, ***caractérisé* en ce que** chaque organe de roulement (11) est monté libre en rotation autour d'un axe parallèle à l'axe de commande (6).

5. Dispositif (5) selon la revendication 4, ***caractérisé* en ce que** l'organe élastique (13) de rappel se présente sous la forme d'un ressort de torsion (15) comprenant deux branches (15a) disposées de part et d'autre de l'axe de commande (6) et transversalement audit axe de commande (6), chaque branche (15a) est insérée au travers d'un orifice (11a) que présente chaque organe de roulement (11) pour former les axes de rotation des organes de roulement (11).

6. Dispositif (5) selon la revendication 4, ***caractérisé* en ce que** l'organe élastique (13) de rappel comprend deux tiges (16) parallèles disposées de part et d'autre de l'axe de commande (6) et transversalement audit axe de commande (6), chaque tige (16) traverse un orifice (11a) que présente chaque organe de roulement (11) pour former les axes de rotation des organes de roulement (11), lesdites tiges (16) étant reliées entre elles par des ressorts de traction (17) disposés au niveau de chaque extrémité des tiges (16).

7. Dispositif selon la revendication 1, ***caractérisé* en ce que** les organes de roulement sont des billes.

8. Dispositif selon l'une des revendications 1 à 7, ***caractérisé* en ce que** le doigt de commande (7) est un doigt de passage, et l'axe de commande (6) est un axe de passage.

9. Dispositif selon l'une des revendications 1 à 7, ***caractérisé* en ce que** le doigt de commande (7) est un doigt de sélection, et l'axe de commande (6) est un axe de sélection.
